# EUROPEAN PATENT SPECIFICATION

(11) **EP 2 789 885 B1**
(45) Date of publication and mention of the grant of the patent: **12.06.2019**
(21) Application number: 13196838.0
(22) Date of filing: 12.12.2013
(51) Int. Cl.: F16K 11/00, G05D 23/13

(54) **External thermostatic mixer, particularly for hygienic-sanitary components, with high safety against the danger of contact burns**
Externe thermostatische Mischbatterie, insbesondere für hygienisch-sanitäre Komponenten mit hoher Sicherheit gegen die Gefahr von Kontaktverbrennungen
Mélangeur thermostatique externe, en particulier pour des éléments hygiéno-sanitaires, avec une sécurité élevée contre le risque de brûlures de contact

(30) Priority: 11.04.2013 IT MI20130584
(43) Date of publication of application: 15.10.2014
(73) Proprietor: Carlo Nobili S.p.A. - Rubinetterie, 28021 Borgomanero (Prov. of Novara) (IT)
(72) Inventor: Nobili, Alberto, 28021 Borgomanero (NO) (IT)
(74) Representative: Modiano, Micaela Nadia

(56) References cited:
- EP-A1- 2 141 394
- CN-A- 102 996 857
- IT-B- 1 137 474

## Description

The present invention relates to an external thermostatic mixer, particularly for hygienic-sanitary components, with high safety against the danger of contact burns.

As is known, thermostatic mixers are taps by means of which it is possible to set the desired temperature for the mixed water that is delivered.

Thermostatic mixers of the known type are constituted generally by a mixer body, usually made of metal, inside which there is a mixing chamber in which a thermostatic mixing cartridge is accommodated. The mixing chamber has a first inlet, which is connected to a cold water supply port formed in the body of the mixer, a second inlet, which is connected to a hot water supply port that is formed in the mixer body, and an outlet, which is connected to a mixed water delivery duct that leads to the outside of the mixer body. Generally, the supply ports are formed by respective connectors that are screwed to the mixer body and by means of which the mixer is connected to the water mains and to a hot water supply duct. The mixing cartridge is provided with an adjustment element that is arranged at the first inlet and at the second inlet of the mixing chamber and can move to vary the ratio between the degree of opening of these inlets so as to vary the ratio between the flow rates of cold water and hot water that are mixed. This adjustment element is connected to a heat-sensitive element that is contacted by the mixed water and causes the movement of the adjustment element as the temperature of the mixed water varies. The adjustment element is also connected to an adjustment knob that is located outside the mixer body and by means of which it is possible to set the desired temperature for the mixed water by placing the adjustment element in a preset initial position that corresponds to a preset ratio between the flow rates of cold water and of hot water. During delivery, as the temperature of the delivered water varies, if it differs from the set temperature, the heat-sensitive element causes the movement of the adjustment element, varying the ratio between the flow rates of cold water and of hot water so as to keep the temperature of the mixed water at the set value.

An adjustment chamber is formed along the delivery duct and a flow control element is arranged therein and connected to another knob that is arranged outside the mixer body. By means of this other knob it is possible to vary the flow rate of the water delivered by the mixer and therefore to open or close the thermostatic mixer.

In some types of thermostatic mixers that have multiple outlets of the delivery duct in order to serve multiple users, such as for example shower heads or manual spray heads or lateral nozzles, the flow control element also acts as a selector, by means of which it is possible to connect the delivery duct, which enters the adjustment chamber, to one or more of these outlets.

In thermostatic mixers of the known type, the hot water supply port is connected to the second supply port of the mixing chamber by means of a compartment or duct that is provided directly in the mixer body. The delivery duct also is generally provided directly in the mixer body.

As a consequence, the mixer body, during use of the mixer, can progressively become hot and reach temperatures that can cause burns or in any case cause discomfort to the user if the user touches it.

EP 2 141 394 A1 shows a thermostatic mixer in which a delivery duct is entirely immersed in the flow of cold water so that only cold water is in contact with the envelope of the mixer body.

The aim of the present invention is to solve the problem described above, providing an external thermostatic mixer, particularly for hygienic-sanitary components, in which the mixer body can be kept at such temperatures as to exclude definitely the danger of scalding the user and in any case such as to not cause discomfort to the user upon contact with the mixer body.

Within this aim, an object of the invention is to provide a thermostatic mixer in which the temperature of the mixer body does not expose the user to the danger of burns even after particularly prolonged periods of use.

Another object of the invention is to provide a thermostatic mixer that is simple and easy to use and has high reliability in operation.

Another object of the invention is to provide a thermostatic mixer that can be manufactured at competitive costs.

This aim, as well as these and other objects that will become more apparent hereinafter, are achieved by an external thermostatic mixer, particularly for hygienic-sanitary components, comprising a mixer body in which there is a mixing chamber that accommodates a thermostatic mixing cartridge and has at least one first inlet connected to a cold water supply port, at least one second inlet connected to a hot water supply port, and at least one outlet for the mixed water that is connected to at least one mixed water delivery duct that leads out of said mixer body, characterized in that at least said mixed water delivery duct extends within a protective body that is arranged inside said mixer body and is spaced, along at least part of its extension, from the internal walls of said mixer body, between said mixer body and said protective body a space being defined that is separated hermetically from said hot water supply port and from said mixed water outlet.

Further characteristics and advantages of the invention will become more apparent from the description of two preferred not exclusive embodiments of the thermostatic mixer according to the invention, illustrated by way of non-limiting example in the accompanying drawings, wherein:

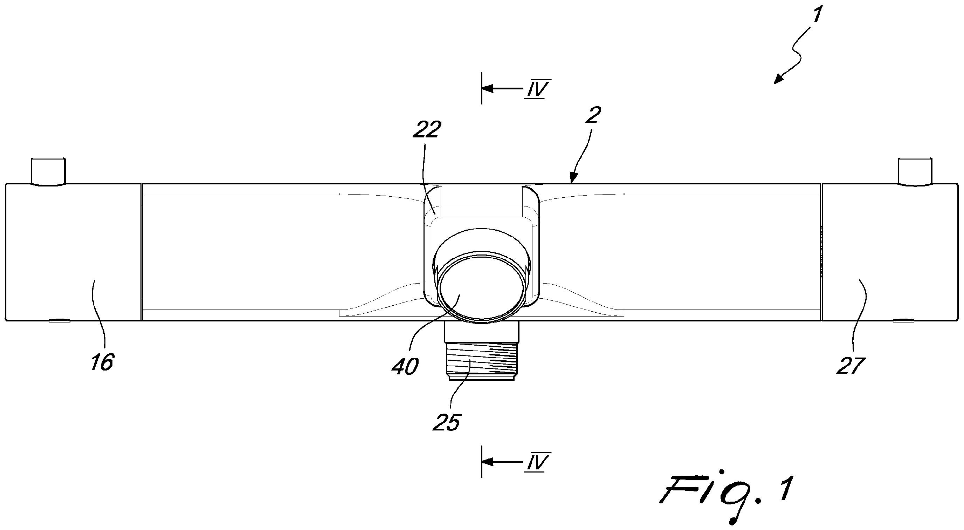

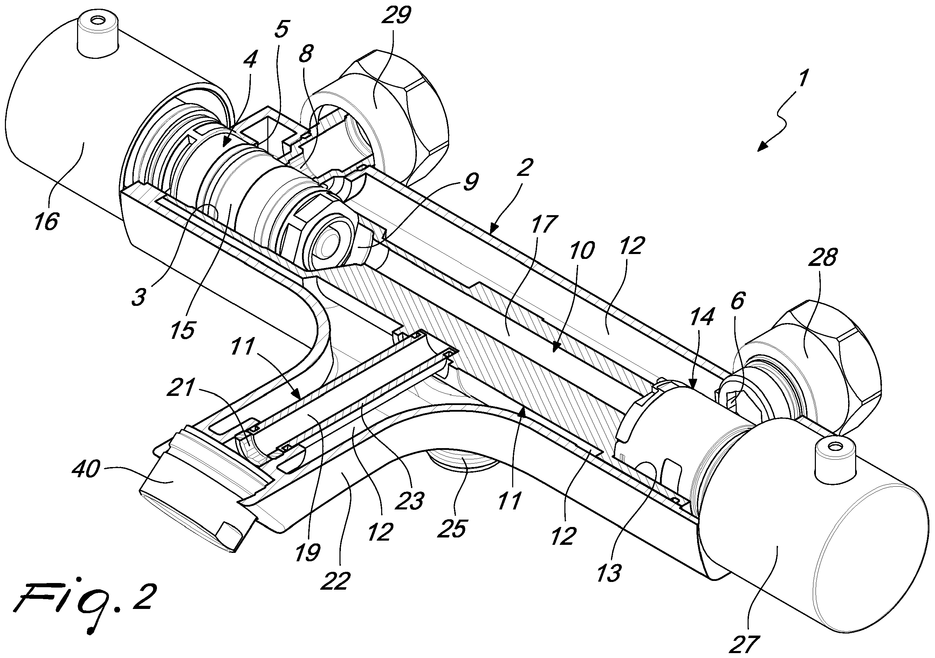

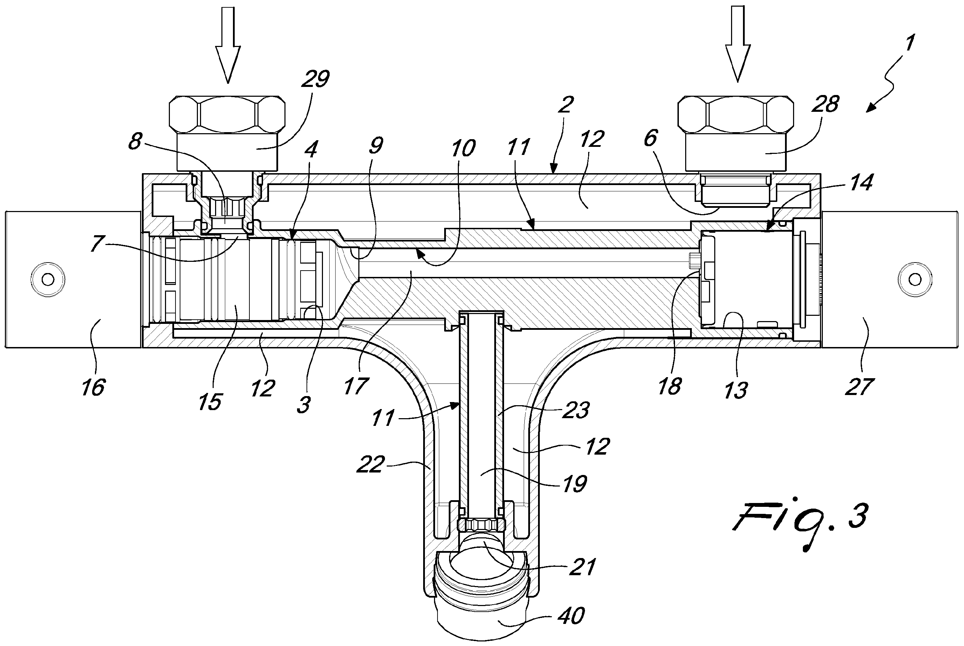

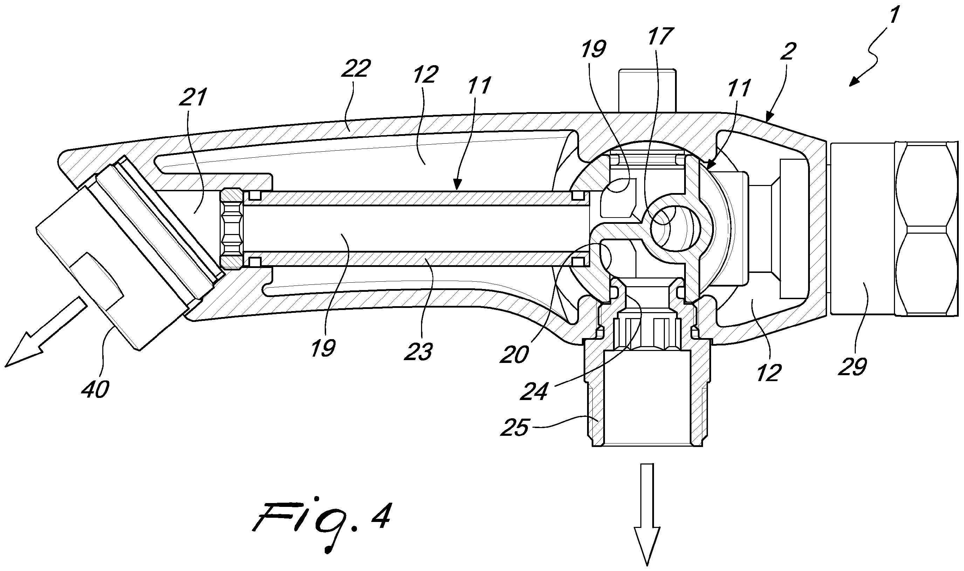

Figures 1 to 4 are views of a first embodiment of the thermostatic mixer according to the invention that can be used for bathtubs, more particularly:
Figure 1 is a front elevation view of the thermostatic mixer;
Figure 2 is a partially sectional perspective view of the thermostatic mixer;
Figure 3 is a top plan view of Figure 2;
Figure 4 is a sectional view of Figure 1, along the plane IV-IV;
Figures 5 to 9 are views of a second embodiment of the thermostatic mixer according to the invention that can be used for showers, more particularly:

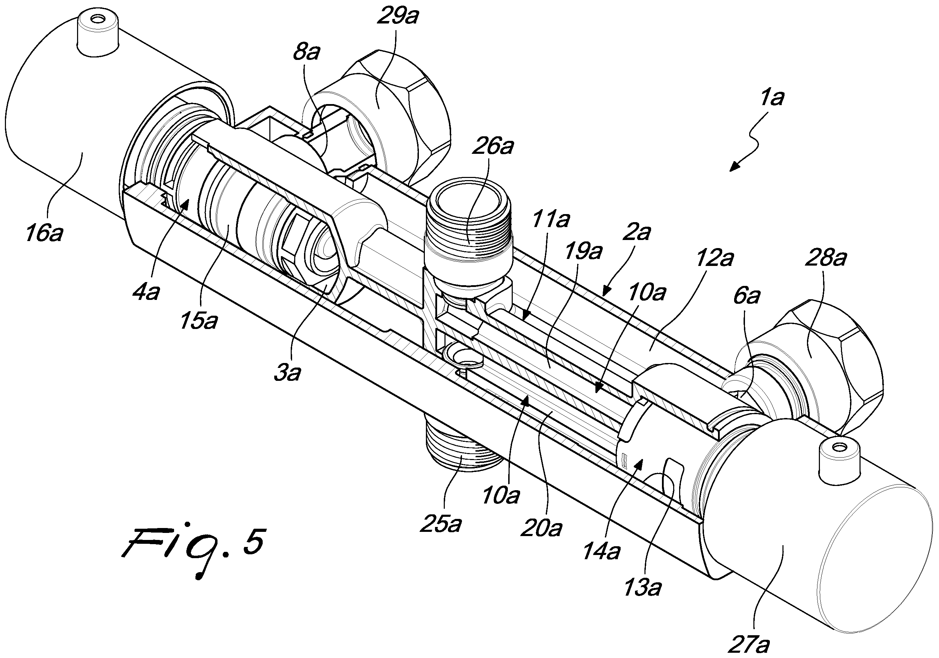

Figure 5 is a partially sectional perspective view of the thermostatic mixer;

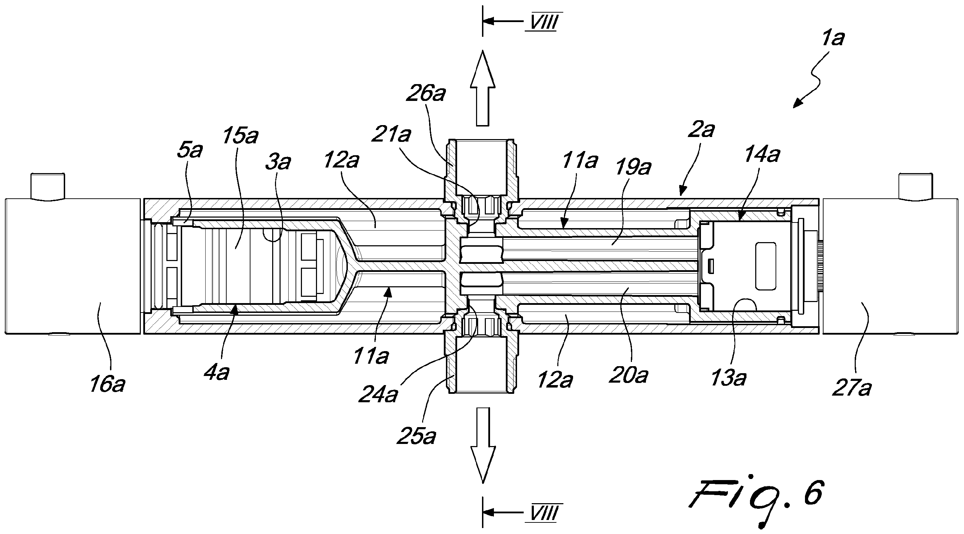

Figure 6 is a partially sectional front elevation view of the thermostatic mixer;

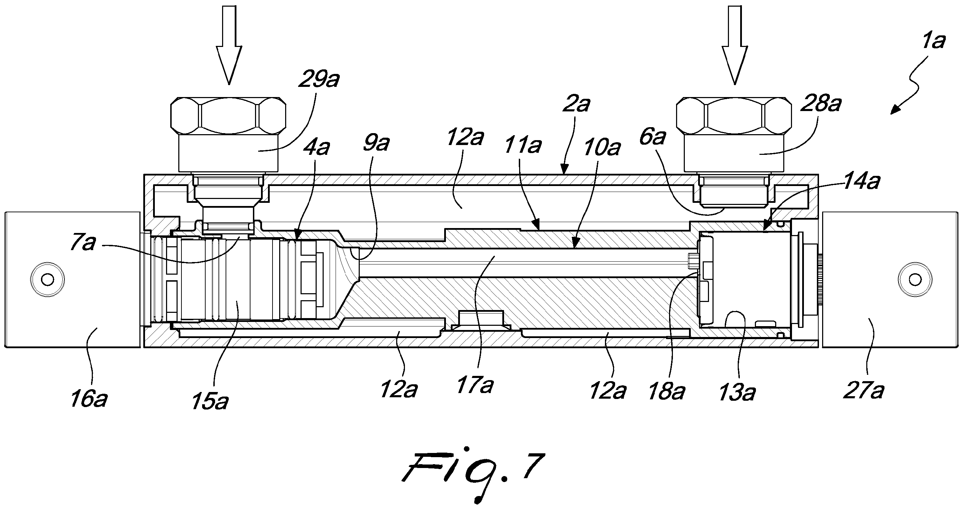

Figure 7 is partially sectional top plan view of the thermostatic mixer;

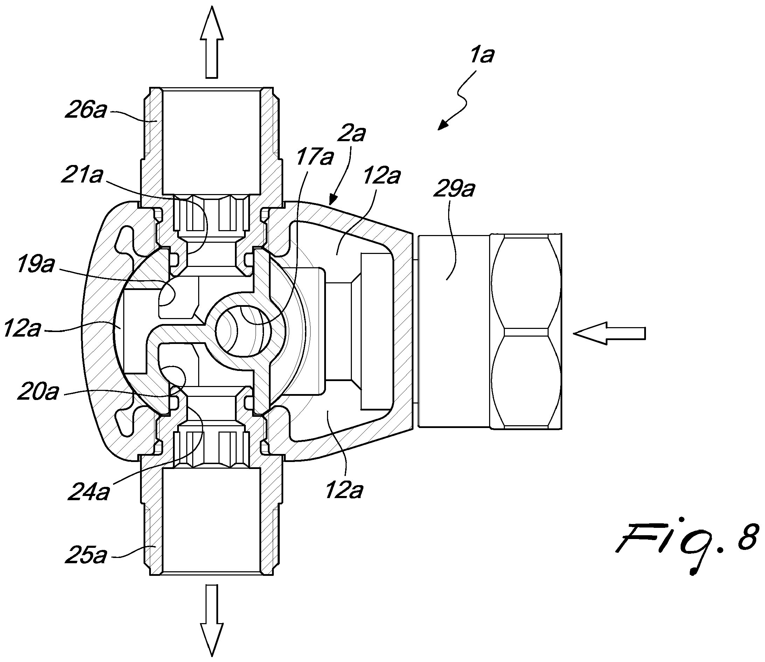

Figure 8 is a sectional view of Figure 6, along the plane VIII-VIII;

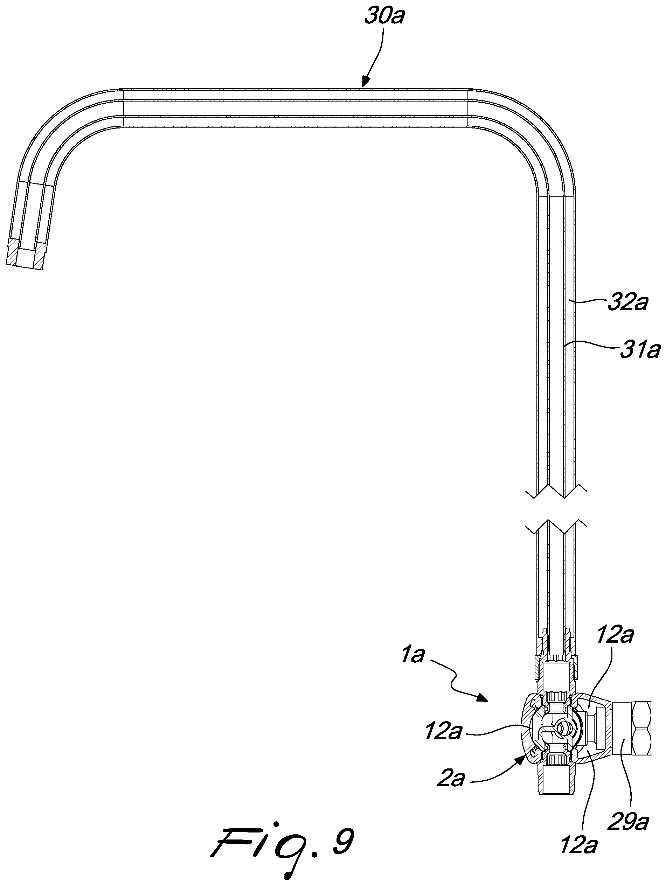

Figure 9 is a sectional view, as in Figure 8, of the thermostatic mixer with a delivery tube applied thereto and shown in axial cross-section.

With reference to the cited figures, the thermostatic mixer according to the invention, generally designated in the two illustrated embodiments by the reference numerals 1, 1a, comprises a mixer body 2, 2a in which there is a mixing chamber 3, 3a that accommodates a thermostatic mixing cartridge 4, 4a of a known type.

The mixing chamber 3, 3a has: at least one inlet 5, 5a, which is connected to a cold water supply port 6, 6a; at least one second inlet 7, 7a, which is connected to a hot water supply port 8, 8a; and at least one mixed water outlet 9, 9a, which is connected to at least one mixed water delivery duct 10, 10a that leads outside the mixer body 2, 2a.

The cold water supply port 6, 6a and the hot water supply port 8, 8a are formed by respective connectors 28, 28a and 29, 29a, which are connected, for example by means of a threaded coupling, to the mixer body 2, 2a at adapted holes.

According to the invention, at least the mixed water delivery duct 10, 10a extends within a protective body 11, 11a, which is arranged inside the mixer body 2, 2a and is spaced, over at least part of its extension, from the internal walls of the mixer body 2, 2a so that between the mixer body 2, 2a and the protective body 11, 11a there is a space 12, 12a that is separated hermetically from the hot water supply port 8, 8a and from the mixed water delivery outlet 9, 9a.

In this manner, the space 12, 12a is never affected by the hot water or by the mixed water and therefore the outer surface of the mixer body 2, 2a can never reach temperatures that are dangerous or unpleasant for the user in case of contact.

Preferably, the space 12, 12a is connected to the cold water supply port 6, 6a and is therefore cooled constantly, during the operation of the thermostatic mixer, by the cold water that passes through the mixer body 2, 2a.

Conveniently, the first inlet 5, 5a of the mixing chamber 3, 3a is connected to the cold water supply port 6, 6a through the space 12, 12a.

Preferably, the protective body 11, 11a is made of a material with low heat conductivity or in any case with a heat conductivity that is significantly lower than that of the mixer body 2, 2a, for example a synthetic material.

A flow rate adjustment chamber 13, 13a is formed along the delivery duct 10, 10a and accommodates means 14, 14a for adjusting the flow rate of the mixed water to be delivered.

More particularly, the mixing chamber 3, 3a is formed preferably, like the delivery duct 10, 10a, inside the protective body 11, 11a.

The mixer body 2, 2a has an elongated shape, and so does the protective body 11, 11a, which is accommodated inside it. The mixing chamber 3, 3a and the flow rate adjustment chamber 13, 13a are formed in the protective body 11, 11a proximate to the longitudinal ends of the mixer body 2, 2a.

The thermostatic mixing cartridge 4, 4a can be constituted by a mixing cartridge of the known type, which has an adjustment element 15, 15a that is arranged at the first inlet 5, 5a and at the second inlet 7, 7a and can move in order to vary the ratio between the degree of opening of these inlets so as to vary the ratio between the flow rates of cold water and hot water that are mixed. This adjustment element 15, 15a is connected to a heat-sensitive element, which is not visible in the figures, since it is arranged inside the thermostatic mixing cartridge 4, 4a, is contacted by the mixed water and causes the movement of the adjustment element 15, 15a as the temperature of the mixed water varies. The adjustment element 15, 15a is connected to an adjustment knob 16, 16a, which is arranged outside the mixer body 2, 2a and by means of which it is possible to set the desired temperature for the mixed water by setting a preset position of the adjustment element 15, 15a.

The dispensing duct 10, 10a has a part 17, 17a that extends from the mixing chamber 3, 3a to the flow rate adjustment chamber 13, 13a and a part 19, 19a, 20, 20a that extends from the flow rate adjustment chamber 13, 13a to one or more outlets provided on the mixer body 2, 2a.

In the two illustrated embodiments, the flow rate adjustment chamber 13, 13a has an inlet 18, 18a, which is connected by the delivery duct 10, 10a to the outlet 9, 9a of the mixing chamber 3, 3a, and two outlets from which two branches 19, 19a, 20, 20a of the delivery duct 10, 10a extend.

In the first embodiment, a branch 19 of the two branches extends from the flow rate adjustment chamber 13 to the delivery port 21 arranged at the end of an arm 22 that protrudes from the front side of the mixer body 2, 2a. The branch 19 of the delivery duct 10 extends so as to correspond to the inside of an arm 23 of the protective body 11 arranged inside the arm 22 of the mixer body 2.

An aerator 40 is fitted, in a manner known per se, on the delivery port 21.

It should be noted that the space 12 also extends between the internal walls of the arm 22 of the mixer body 2 and the arm 23 of the protective body 11.

The other branch 20 of the delivery duct 10 extends from the flow rate adjustment chamber 13 to a delivery outlet 24 that is formed by a connector 25 that is connected, for example by means of a threaded coupling, to the mixer body 2, at a hole that is formed in an intermediate region of the lower side of the mixer body 2. By means of the connector 25 it is possible to connect the thermostatic mixer to a flexible hose that supplies another user device, such as for example a manual spray head.

In the second embodiment, the two branches 19a, 20a of the delivery duct 10a in output from the flow rate adjustment chamber 13a extend, just like the portion of the delivery duct 10a that connects the mixing chamber 3a to the flow rate adjustment chamber 13a, in the part of the protective body 11a that extends from the mixing chamber 3a to the flow rate adjustment chamber 13a.

The two branches 19a, 20a of the delivery duct 10a each extend from the flow rate adjustment chamber 13a to a corresponding delivery port 21a, 24a that is formed by a corresponding connector 25a, 26a that is connected, for example by means of a threaded coupling, to the mixer body 2a. More precisely, the connector 25a is connected to the mixer body 2a at a hole that is formed in an intermediate region of the upper side of the mixer body 2a, while the connector 26a is connected to the mixer body 2a at another hole that is formed in an intermediate region of the lower side of the mixer body 2a. By means of the connectors 25a and 26a it is possible to connect the thermostatic mixer to two user devices, for example a delivery spout 30a of the type shown in Figure 9, which can support a shower head of a known type, not shown, and a flexible delivery hose, which supplies another user device, such as for example a manual spray head.

If, as in the illustrated embodiments, the flow rate adjustment chamber 13, 13a has two outlets for supplying two user devices, the flow rate adjustment means 14, 14a comprise a redirection element, of a known type, that is capable of performing the selective and/or combined connection of the two outlets to the inlet 18, 18a of said flow rate adjustment chamber 13, 13a and therefore of performing the selective and/or combined connection of the branch 17, 17a of the delivery duct 10, 10a that enters the flow rate adjustment chamber 13, 13a with the two branches 19, 20, 19a, 20a of the delivery duct 10, 10a that exit from the flow rate adjustment chamber 13, 13a.

The flow rate adjustment means 14, 14a are connected to an adjustment knob 27, 27a, which is associated with a longitudinal end of the mixer body 2, 2a that is opposite to the end that supports the adjustment knob 16, 16a that actuates the thermostatic mixing cartridge 4, 4a.

The delivery spout 30a, if provided, also is implemented so as to avoid burns or discomfort to the user in case of contact. The delivery spout 30a in fact is provided on the inside with a tube 31a that is spaced from the internal walls of the delivery spout 30a. Said tube 31a can be connected hermetically to the connector 26a that forms the delivery port 24a of the delivery duct 10a so that a space 32a is formed between the tube 31a and the internal walls of the delivery spout 30a and is separated hermetically from the inside of the tube 31a and from the delivery duct 10a. In this manner, the mixed water, in output from the thermostatic mixer, flows inside the tube 31a, preferably made of synthetic material, and does not make contact with the internal walls of the delivery spout 30a and thus avoids heating it excessively.

Operation of the mixer according to the invention is evident from what has been described and illustrated. In particular, it is evident that the space 12, 12a that exists between the protective body 11, 11a and the internal walls of the mixer body 2, 2a protects the mixer body 2, 2a from excessive heating, and if, as preferred, the cold water that enters the mixer body 2, 2a is caused to flow in said space 12, 12a, one even achieves cooling of the mixer body 2, 2a, definitely preventing the danger of burns on the part of the user.

In practice it has been found that the thermostatic mixer according to the invention achieves fully the intended aim and object, since it avoids definitely the danger of burns on the part of the user in case of contact with the mixer body.

## Claims

1. A thermostatic mixer, particularly for hygienic-sanitary components, comprising a mixer body (2, 2a) in which there is a mixing chamber (3, 3a) that accommodates a thermostatic mixing cartridge (4, 4a) and has at least one first inlet (5, 5a) connected to a cold water supply port (6, 6a), at least one second inlet (7, 7a) connected to a hot water supply port (8, 8a), and at least one outlet (9, 9a) for the mixed water that is connected to at least one mixed water delivery duct (10, 10a) that leads out of said mixer body (2, 2a), at least said mixed water delivery duct (10, 10a) extends within a protective body (11, 11a) that is arranged inside said mixer body (2, 2a) and is spaced, over its extension, from the internal walls of said mixer body (2, 2a), between said mixer body (2, 2a) and said protective body (11, 11a) a space (12, 12a) being defined, along said delivery duct (10, 10a) there is a flow rate adjustment chamber (13, 13a) that accommodates means (14, 14a) for adjusting the flow rate of the mixed water to be delivered, **characterized in that** said delivery duct (10, 10a) comprises at least:
- a first branch (17, 17a) that enters said flow rate adjustment chamber (13, 13a),
- a second branch (19,19a) that exits from said flow rate adjustment chamber (13, 13a) and leads out of said mixer body (2, 2a) and
- a third branch (20, 20a) that exits from said flow rate adjustment chamber (13, 13a) and leads out of said mixer body (2, 2a);
said flow rate adjustment means (14, 14a) comprising a redirection element for the selective and/or combined connection of said first branch (17, 17a) of said delivery duct (10, 10a) with said second and third branches (19, 20, 19a, 20a) of the delivery duct (10, 10a);
said space (12, 12a) being connected to said cold water supply port (6, 6a); said space (12, 12a) being separated from said hot water supply port (8, 8a) and from said mixed water outlet (9, 9a) in such a way that said space (12, 12a) is never affected by the hot water or by the mixed water.

2. The mixer according to claim 1, **characterized in that** said first inlet (5, 5a) is connected to said cold water supply port (6, 6a) through said space (12, 12a).

3. The mixer according to claim 1, **characterized in that** said that space (12, 12a) is separated hermetically from said hot water supply port (8, 8a) and from said mixed water outlet (9, 9a).

4. The mixer according to one or more of the preceding claims, **characterized in that** said mixing chamber (3, 3a) is formed in said protective body (11, 11a).

5. The mixer according to one or more of the preceding claims, **characterized in that** said protective body (11, 11a) is made of a material that has a lower heat conductivity than the material of which said mixer body (2, 2a) is made.

6. The mixer according to one or more of the preceding claims, **characterized in that** said protective body (11, 11a) is made of synthetic material.

7. The mixer according to one or more of the preceding claims, **characterized in that** it comprises a delivery spout (30a) that is connected to a delivery port (21a) connected to said delivery duct (10a), said delivery spout (30a) being provided on the inside with a tube (31a) that is spaced from the internal walls of said delivery spout (30a) and is connected hermetically to said delivery port (21a), where between said tube (31a) and the internal walls of said delivery spout (30a) a space (32a) is defined that is separated hermetically from the inside of said tube (31a) and from said delivery duct (10a).

## Patentansprüche

1. Eine thermostatische Mischbatterie, insbesondere für hygienisch-sanitäre Komponenten, die einen Mischerkörper (2, 2a) umfasst, in welchem sich eine Mischkammer (3, 3a) befindet, die eine thermostatische Mischkartusche (4, 4a) enthält und mindestens einen ersten Einlass (5, 5a), verbunden mit einem Kaltwasseranschluss (6, 6a), mindestens einen zweiten Einlass (7, 7a), verbunden mit einem Warmwasseranschluss (8, 8a), und mindestens einen Auslass (9, 9a) für das gemischte Wasser hat, der mit mindestens einer Mischwasserauslassleitung (10, 10a) verbunden ist, die aus dem Mischerkörper (2, 2a) hinausführt; zumindest die Mischwasserauslassleitung (10, 10a) erstreckt sich innerhalb eines Schutzkörpers (11, 11a), der sich in dem Mischerkörper (2, 2a) befindet und über seine Ausdehnung von den Innenwänden des Mischerkörpers (2, 2a) beabstandet ist; wobei zwischen dem Mischerkörper (2, 2a) und dem Schutzkörper (11, 11a) ein Raum (12, 12a) bestimmt ist; wobei sich entlang der Mischwasserauslassleitung (10, 10a) eine Strömungsraten-Anpassungskammer (13, 13a) befindet, die Mittel (14, 14a) zur Anpassung der Strömungsrate des abzugebenden Mischwassers enthält; **dadurch gekennzeichnet, dass** die Mischwasserauslassleitung (10, 10a) mindestens Folgendes umfasst:
- einen ersten Zweig (17, 17a), der in die Strömungsraten-Anpassungskammer (13, 13a) eintritt,
- einen zweiten Zweig (19, 19a), der aus der Strömungsraten-Anpassungskammer (13, 13a) austritt und aus dem Mischerkörper (2, 2a) herausführt, und
- einen dritten Zweig (20, 20a), der aus der Strömungsraten-Anpassungskammer (13, 13a) austritt und aus dem Mischerkörper (2, 2a) herausführt;
wobei die Strömungsraten-Anpassungsmittel (14, 14a) ein Umleitungselement für die selektive und/oder kombinierte Verbindung des ersten Zweigs (17, 17a) der Mischwasserauslassleitung (10, 10a) mit dem zweiten und dem dritten Zweig (19, 20, 19a, 20a) der Auslassleitung (10, 10a) umfasst;
wobei der Raum (12, 12a) mit dem Kaltwasseranschluss (6, 6a) verbunden ist; wobei der Raum (12, 12a) von dem Warmwasseranschluss (8, 8a) und von dem Mischwasserauslass (9, 9a) so getrennt ist, dass der Raum (12, 12a) nie von dem heißen Wasser oder von dem Mischwasser beeinflusst wird.

2. Die Mischbatterie gemäß Anspruch 1, **dadurch gekennzeichnet, dass** der erste Einlass (5, 5a) über den Raum (12, 12a) mit dem Kaltwasseranschluss (6, 6a) verbunden ist.

3. Die Mischbatterie gemäß Anspruch 1, **dadurch gekennzeichnet, dass** der Raum (12, 12a) hermetisch von dem Warmwasseranschluss (8, 8a) und von dem Mischwasserauslass (9, 9a) getrennt ist.

4. Die Mischbatterie gemäß einem oder mehreren der obigen Ansprüche, **dadurch gekennzeichnet, dass** die Mischkammer (3, 3a) in dem Schutzkörper (11, 11a) geformt ist.

5. Die Mischbatterie gemäß einem oder mehreren der obigen Ansprüche, **dadurch gekennzeichnet, dass** der Schutzkörper (11, 11a) aus einem Material besteht, das eine geringere Wärmeleitfähigkeit hat als das Material, aus dem der Mischerkörper (2, 2a) hergestellt ist.

6. Die Mischbatterie gemäß einem oder mehreren der obigen Ansprüche, **dadurch gekennzeichnet, dass** der Schutzkörper (11, 11a) aus synthetischem Material besteht.

7. Die Mischbatterie gemäß einem oder mehreren der obigen Ansprüche, **dadurch gekennzeichnet, dass** sie einen Ausguss (30a) umfasst, der mit einer Ablassöffnung (21a) verbunden ist, welche mit der Auslassleitung (10a) in Verbindung steht; wobei der Ausguss (30a) innen mit einem Rohr (31a) versehen ist, das von den Innenwänden des Ausgusses (30a) beabstandet und hermetisch an die Ablassöffnung (21a) angeschlossen ist; wobei zwischen dem Rohr (31a) und den Innenwänden des Ausgusses (30a) ein Raum (32a) bestimmt ist, der hermetisch vom Inneren des Rohrs (31a) und von der Auslassleitung (10a) getrennt ist.

## Revendications

1. Mélangeur thermostatique, en particulier pour des composants hygiéno-sanitaires, comportant un corps de mélangeur (2, 2a) dans lequel il existe une chambre de mélange (3, 3a) qui reçoit une cartouche de mélange thermostatique (4, 4a) et a au moins une première entrée (5, 5a) reliée à un orifice d'alimentation en eau froide (6, 6a), au moins une seconde entrée (7, 7a) reliée à un orifice d'alimentation en eau chaude (8, 8a), et au moins une sortie (9, 9a) pour l'eau mélangée qui est reliée à au moins une conduite de distribution d'eau mélangée (10, 10a) qui mène à l'extérieur dudit corps de mélangeur (2, 2a), au moins ladite conduite de distribution d'eau mélangée (10, 10a) s'étend à l'intérieur d'un corps de protection (11, 11a) qui est agencé à l'intérieur dudit corps de mélangeur (2, 2a) et est espacé, sur son extension, des parois internes dudit corps de mélangeur (2, 2a), entre ledit corps de mélangeur (2, 2a) et ledit corps de protection (11, 11a) étant défini un espace (12, 12a), le long de ladite conduite de distribution, il existe une chambre de réglage de débit (13, 13a) qui reçoit des moyens (14, 14a) pour régler le débit de l'eau mélangée à distribuer, **caractérisé en ce que** ladite conduite de distribution (10, 10a) comporte au moins :
- un premier embranchement (17, 17a) qui pénètre dans ladite chambre de réglage de débit (13, 13a),
- un deuxième embranchement (19, 19a) qui sort de ladite chambre de réglage de débit (13, 13a) et mène à l'extérieur dudit corps de mélangeur (2, 2a) et
- un troisième embranchement (20, 20a) qui sort de ladite chambre de réglage de débit (13, 13a) et mène à l'extérieur dudit corps de mélangeur (2, 2a),
lesdits moyens de réglage de débit (14, 14a) comportant un élément de redirection pour le raccordement sélectif et/ou combiné dudit premier embranchement (17, 17a) de ladite conduite de distribution (10, 10a) auxdits deuxième et troisième embranchements (19, 20, 19a, 20a) de la conduite de distribution (10, 10a),
ledit espace (12, 12a) étant relié audit orifice d'alimentation en eau froide (6, 6a), ledit espace (12, 12a) étant séparé dudit orifice d'alimentation en eau chaude (8, 8a) et de ladite sortie d'eau mélangée (9, 9a) de telle manière que ledit espace (12, 12a) ne soit jamais affecté par l'eau chaude ou par l'eau mélangée.

2. Mélangeur selon la revendication 1, **caractérisé en ce que** ladite première entrée (5, 5a) est reliée audit orifice d'alimentation en eau froide (6, 6a) via ledit espace (12, 12a).

3. Mélangeur selon la revendication 1, **caractérisé en ce que** ledit espace (12, 12a) est séparé hermétiquement dudit orifice d'alimentation en eau chaude (8, 8a) et de ladite sortie d'eau mélangée (9, 9a).

4. Mélangeur selon une ou plusieurs des revendications précédentes, **caractérisé en ce que** ladite chambre de mélange (3, 3a) est formée dans ledit corps de protection (11, 11a).

5. Mélangeur selon une ou plusieurs des revendications précédentes, **caractérisé en ce que** ledit corps de protection (11, 11a) est constitué d'un matériau qui a une conductivité thermique inférieure à celle du matériau dont est constitué le corps de mélangeur (2, 2a).

6. Mélangeur selon une ou plusieurs des revendications précédentes, **caractérisé en ce que** ledit corps de protection (11, 11a) est constitué d'une matière synthétique.

7. Mélangeur selon une ou plusieurs des revendications précédentes, **caractérisé en ce qu'**il comporte un bec de distribution (30a) qui est relié à un orifice de distribution (21a) relié à ladite conduite de distribution (10a), ledit bec de distribution (30a) étant pourvu, à l'intérieur, d'un tube (31a) qui est espacé des parois internes dudit bec de distribution (30a) et est relié hermétiquement audit orifice de distribution (21a), où entre ledit tube (31a) et les paroi internes dudit bec de distribution (30a) est défini un espace (32a) qui est séparé hermétiquement de l'intérieur dudit tube (31a) et de ladite conduite de distribution (10a).
